# EUROPEAN PATENT APPLICATION

(11) **EP 1 220 076 A2**
(43) Date of publication of application: **03.07.2002**
(21) Application number: 01130321.1
(22) Date of filing: 19.12.2001
(51) Int. Cl.: G06F 1/00

(54) **Automatic authentication of printed documents**

(30) Priority: 27.12.2000 US 748992
(71) Applicant: Xerox Corporation, Rochester, New York 14644 (US)
(72) Inventor: Weller, Scott W., Penfield, NY 14526 (US)
(74) Representative: Grünecker, Kinkeldey, Stockmair & Schwanhäusser Anwaltssozietät

(57) **Abstract**

A document printer includes an authenticity verifier for examining an electronic document to verify predetermined authentication information in the electronic document. The authentication information may be an electronic signature, or a digital watermark. The authenticity verifier may be included in the printer controller, and examines the authentication information of the document to verify that the document is unchanged from when it was transmitted by the source computer, and for authenticating the source of the document. If the authenticity verifier confirms the authentication information, the printer automatically performs one print function, such as printing the document with an authentication mark. If the authenticity verifier does not confirm the authentication information, the printer automatically performs a different print function, such as not printing the document, or printing the document with an authenticity warning.

## Description

The present invention pertains to providing viewers of a printed document with some indicia of the authenticity of the printed document.

Persons who handle, use, and rely upon printed documents that purport to originate with a particular source often want some type of assurance that the printed document with which they are working originated with its purported source, and that the document is the same as created by the source. With documents that are transmitted entirely in paper format from the source to the user, such assurance is provided by indicia such as a signature or a seal (printed, embossed, sticker, or other attachment). However, such traditional indicia cannot provide the same level of assurance for documents that are transmitted electronically and printed by someone other than the document source.

Techniques are available for users of electronic information to authenticate the electronic information. Such authentication techniques include cryptographic techniques such as digital signatures and digital watermarks, and are commercially available from sources such as Entrust Technologies, VeriSign, Inc., and others. However, such cryptographic techniques are available only to persons having access to the electronic information. The user of a printed copy of the document must rely on the representation of the person who converted the electronic document to the printed document for authentication. Because the printed document may pass through the hands before reaching the viewer, the viewer of the printed document may not be able to determine whether the authenticity of the document was verified.

The present invention is a method of printing an electronic document, and a document printer for printing a document.

In accordance with the method of the present invention, a printing apparatus electronically verifies predetermined authentication information in the document. If the verifying step confirms the predetermined authentication information, the printing apparatus performs a first print function, such as printing the electronic document on a print medium with an authentication mark. If the verifying step does not confirm the predetermined authentication information, the printing apparatus performs a second print function, such as printing the document without an authentication mark, printing the document with an authenticity warning, or issuing an error message.

The printer of the present invention includes an authenticity verifier for examining an electronic document to confirm predetermined authenticity indication in the electronic document, and a print element for applying the image of the electronic document to a print medium. In accordance with a preferred implementation, the print element automatically performs a first print function if the authenticity verifier confirms the predetermined authentication information, and a second print function if the authenticity verifier does not confirm the predetermined authentication information, the print element performs a second print function.

Figure 1 is a conceptual diagram of a system for electronically transmitting, and then printing a document, incorporating aspects of the present invention.

Figure 2 is a conceptual flow diagram of an exemplary process for providing authentication information for a transmitted document.

Figure 3 is a conceptual flow diagram of a portion of the process of verifying authentication information.

Figure 4 is a conceptual flow diagram of a portion of a process of verifying additional authentication information.

Figure 5 shows a portion of a document marked in accordance with an aspect of the present invention with an authentication mark.

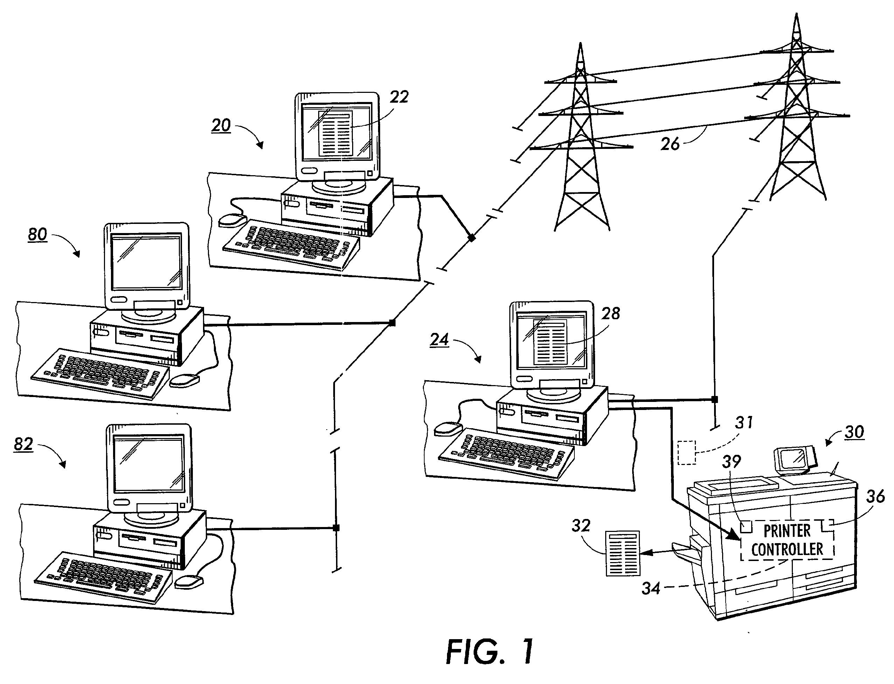

Today, many documents are distributed electronically, and printed away from the document source, by a printer that is not controlled by the document source. For example, referring to Figure 1, a source computer 20 creates a source electronic document 22. The electronic source document 22 represents an image that can be printed on a print medium such as paper. The document may be a text document created with a word processing program, or a graphical document created with a drawing program. Alternatively, the source computer may be a document scanner that scans a printed document and converts the image into an electronic document. The source computer may also be a digital camera, or any other device that creates an electronic digital document that can be printed onto a print medium. Also, the source computer may store electronic documents created by other devices, including other computers, scanners, cameras, etc.

The electronic source document 22 may be transmitted electronically to a destination computer 24, where the document is received as a destination document 28. The source computer 20 may directly transmit the electronic document to the destination computer 24 across a communication link 26, such as a telephone line, a radio link, a satellite link, or other direct connection. Alternatively, the source computer 20 may transmit the document 22 through an electronic mail system via a series of communication links and one or more computer servers (not shown). In addition, the destination computer 24 may remotely access files and documents that are stored on the source computer 20 and instruct the source computer 20 to transmit to the destination computer 24 a document stored on the source computer. For example, the destination computer 24 may access the source computer 20 by direct telephone link, through an internal network, through the worldwide web, or by other remote electronic access. If there are no communication errors, the destination document 28 is identical to the source document 22.

The destination computer 24 may then send the document as an electronic print document 31 to a printer 30 to print the electronic document onto a print medium such as paper, creating a printed document 32. Persons can then refer to the printed document 32 to use the information contained in the document. The printer 30 is a conventional digital printer, such as an ink jet printer, a xerographic or electrostatic printer, or any other device for applying an electronic document image to a print medium. The printer may even be a device for non-permanently displaying a document, such as a portable device with a refreshable display screen, or a device with electronic paper. In addition, the printer may be a facsimile machine or other printer connected directly to the communication link 26 to print the printed document 32 without intervention by a destination computer 24. A printer controller 34 receives print instructions from the destination computer 24 and controls the printer 30. The printer controller 34 may be a general purpose microprocessor programmed with specific operating instructions, or a special purpose controller.

The user of the printed document 32 produced from the printer 30 may desire some assurance that the printed document 32 actually originated from the source computer 20, and that the printed document 32 is identical to the source document 22 transmitted by the source computer. Such assurance should confirm that the document did not change during transmission over the communication link 26 between the source computer and the destination computer, while residing in the destination computer 24, or during transmission between the destination computer 24 and the printer 30.

In accordance with an aspect of the present invention, the printer 30 includes an authenticity verifier 36 that electronically verifies predetermined authentication information that is inserted into or applied to the electronic document by the source computer. In the illustrated embodiment, the authenticity verifier 36 is contained within the printer's embedded controller 34, and is implemented by programming instructions for the controller 34. The authenticity verifier may alternatively be a general purpose microprocessor programmed with the verification information, or a special purpose controller as an element of the printer 30 apart from the printer controller 34.

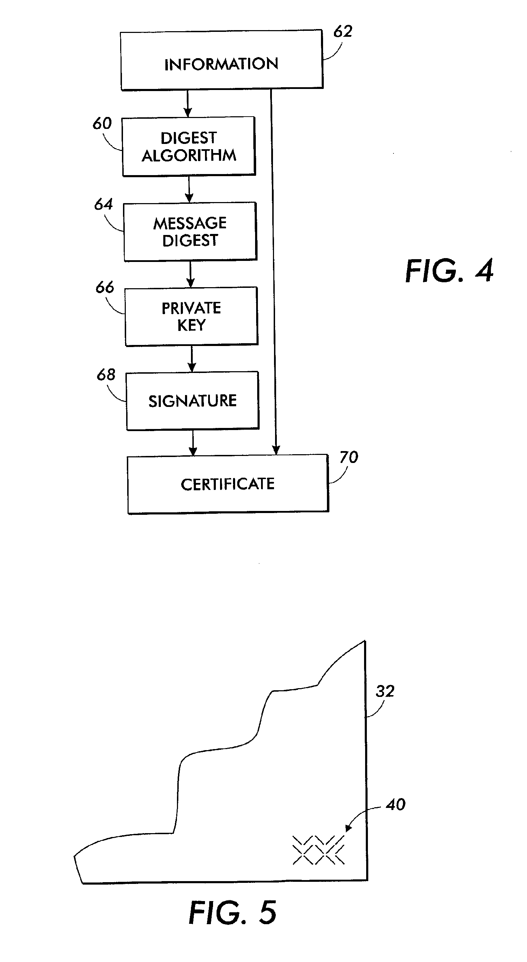

The authenticity verifier 36 verifies authentication information in the electronic print document 31 that should conform to information inserted by the source computer into the electronic source document 22. The printer 30 performs different printer functions depending on the outcome of the operation of the authenticity verifier 36. For example, if the authenticity verifier confirms the predetermined authentication information in the electronic print document 31, the printer 30 may print the contents of the electronic print document on a print medium as the printed document 32 with an authentication mark 40 (see Figure 5), such as a printed seal or statement of authenticity. A subsequent viewer of the printed document 32 with the authentication mark 40 can then rely on the printed document with the authentication mark to the same extent as the viewer could rely upon a signature or other traditional indicia of authenticity applied to a traditional paper document. With additional elements in the printer 30, the authentication mark may also include an embossed seal, an adhesive sticker, or other indicia visible to a user of the printed document. The method and apparatus described provides document authentication at the printer, providing the user of the printed document greater confidence than is possible if the user of the printed document must rely on a person who has had access to the document in its electronic form to authenticate the document. The authentication mark should be designed or selected so that it is difficult for unauthorized persons to replicate or forge. The printer authenticates the document at the time the printer prints the document, similar to the manner in which a signature or seal on a paper document authenticates the document as of the time at which the signature or seal is applied, it does not confirm or deny whether changes may have been made to the printed document after printing by the printer.

If the authenticity verifier 36 does not confirm the predetermined authentication information, the printer controller 34 instructs the printer 30 to perform a different print function. For example, the printer 30 may print the document as a printed document 32, but without an authentication mark, or print the document with an authenticity warning, such as a statement that the printer was unable to verify the authenticity of the document. Alternatively, the printer could be instructed not to print the document or to print an error report. The printer controller 34 may return an error message to the destination computer 24, notifying the user that the authenticity verifier 36 of the printer 30 did not authenticate the contents of the document.

The predetermined authentication information in the electronic print document 31 may be any of several types of authentication information. The authentication information permits the authenticity verifier 36: 1) to identify or confirm that the purported source of the document is the actual source; and 2) to confirm that the electronic print document 31 is unchanged from the source document 22. One exemplary implementation of the authenticity verifier 36 applies a cipher to the document, to a portion of the document, or to a file appended to the document. The cipher applied by the authenticity verifier 36 corresponds to a cipher applied by the source computer 20 to the source electronic document 22, portion of source document, or file appended to the source document.

A digital signature appended to the document, or a digital watermark embedded into the document provides such authentication information. Such digital signatures and digital watermarks and are well understood by persons familiar with cryptographic technologies. However, in the past, such authentication techniques have been available only to the persons who have access to the document in digital electronic form, and not to users of documents already printed.

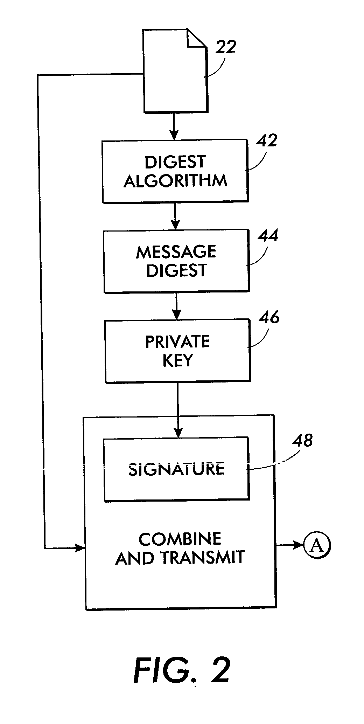

Figures 2 through 5 illustrate conceptually portions of the process of applying and verifying a digital signature, in an exemplary private key/public key implementation. Referring to Figure 2, the source computer 20 applies a source digest algorithm 42 to the contents of the source electronic document 22 to create a source message digest 44. The source message digest 44 may also be a hash function or hash value. The source computer 20 then applies an asymmetric cipher, such as a private key calculation 46, to the source message digest 44 to obtain a source document signature 48. The source computer 20 appends the source document signature 48 to the source electronic document 22 when the document is transmitted from the source computer 20 to the destination computer 24.

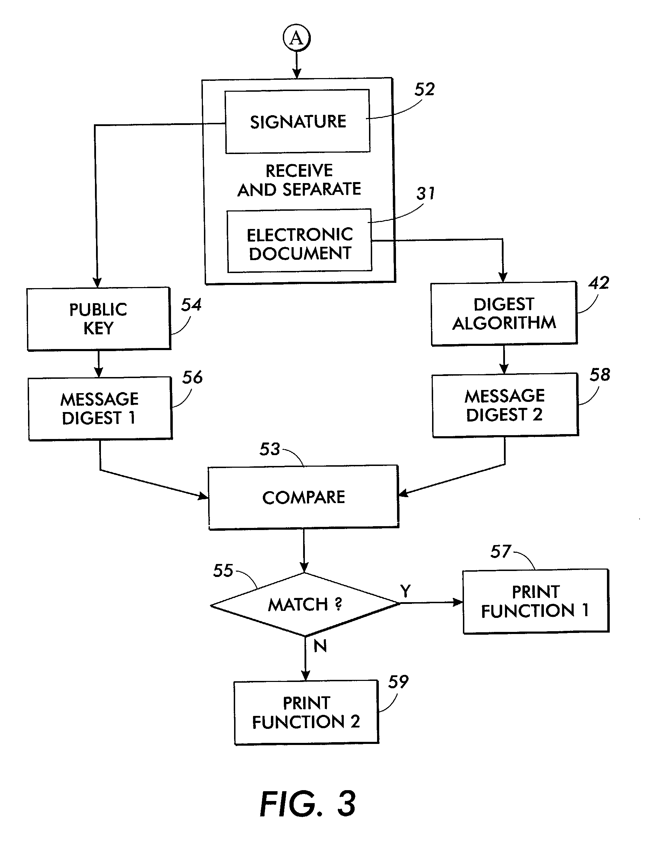

Referring next to Figure 3, the printer 30 receives the print electronic document 31 and its appended signature (either directly over the communication link 26 or through the destination computer 24). The printer's authenticity verifier 36 separates the received signature 52 (the signature received at the printer) from the contents of the electronic print document 31. The authenticity verifier 36 then applies a cipher, such as an asymmetric public key cipher calculation 54, to the received signature 52 to reverse the encryption applied by the private key cipher 46, and obtain a first print message digest 56. The public key cipher 54 corresponds to the private key cipher 46 of the source computer 20. The authenticity verifier also applies to the electronic print document 31 the digest algorithm 42 used by the source computer 20 to produce a second print message digest 58. The authenticity verifier compares 53 the first and second print message digests 56, 58. If they match (are identical) 55, the authenticity verifier 36 concludes that the print electronic document 31 is the same as the source electronic document 22, and that the source computer 20 was the source of that electronic document.

If the first and second message digests match, the printer performs a first print function 57, such as printing the contents of the electronic document on a print medium as a printed document 32 with an authentication mark 40 (Figure 5). The authentication mark may be a facsimile of a signature, a printed seal, or a statement of authenticity. The authentication mark may be applied in a particular location of the printed document, such as the lower right corner of the printed document, as shown in Figure 5.

If the first and second message digests do not match, the printer performs a second print function 59, different from the first print function 57. For example, the printer 30 may not print the document and transmit an error message to the destination computer 24, or may print an error report. Or, the printer may print the document as a printed document 32 without any authentication mark, or with an authenticity warning informing the viewer that the authenticity verifier did not verify the authenticity of the document. A non-match of the print message digests 56, 58 indicates that either the print electronic document 31 differs from the source electronic document 22, or the public key cipher 54 does not correspond to the private key cipher 46, which in turn indicates that the source computer 20 may not be the actual source of the electronic document.

Information encrypted by the private key 46 can only be decrypted by the public key cipher 54 associated with that private key. The user of the source computer 20 supplies the public key cipher 54 and the digest algorithm 42 to any user who has reason to access documents encrypted with the private key 46. However, the user of the source computer 20 does not share with others the private key 46, so that others cannot impersonate that user. The public key cipher 54 and the digest algorithm 42 are stored in the printer for access by the authenticity verifier 36. The public key cipher 54 and the digest algorithm 42 may be stored in memory 39 that is separate from, or incorporated into, the authenticity verifier 36 or the printer controller 34. The printer memory 39 in which the public key cipher and the digest algorithm are stored is preferably rewritable, so that the stored authentication information can be changed periodically.

Persons familiar with the cryptographic arts will recognize that the private key and public key ciphers 46, 54 may be applied to the entire contents of the electronic document, and not just the message digest. However, since the application of such ciphers is computationally expensive, application to the message digest only is more efficient. The electronic document and the digital signature may be transmitted so that the printer 30 receives them as a single file, or as separate files. For example, the printer may receive the electronic document as a first file, and then receive the digital signature for that file as a second file (or the reverse). In addition, the electronic document itself may be transmitted across the communication link as a single file, or as multiple files.

A trusted third party other than the user of the source computer 20 may provide the public key cipher 54 and the digest algorithm 42 for the authenticity verifier 36. Persons familiar with cryptographic arts will recognize that the authenticity verifier 36 may also implement well known methods of authenticating the public key cipher 54. An exemplary process is shown in Figure 4. A certifying authority (a trusted source) creates a certificate consisting of a signed public key. The certifying authority signs an information file 62 that includes the public key cipher 54, information about the certifying authority, and perhaps information about the source computer 20. The certifying authority signs the information file 62 by applying a certification digest algorithm 60 to the information file 62 to create a certification message digest 64. The certification digest algorithm may or may not be identical to the source digest algorithm 42. The certifying authority then applies its private key 66 as an asymmetric cipher to the certification message digest 64 to obtain a certification signature 68. The certification signature 68 can then be attached to the original information file 62 to create a certificate 70. The authenticity verifier 36 can then decrypt and verify the certificate 70 from the trusted certifying authority, since the authenticity verifier 36 already has the certification digest algorithm 60 from the trusted certifying authority, and the public key corresponding to the certifying authority's private key 66. One method for obtaining a certificate is to electronically access a computer under the control of the certifying authority. Such a computer may be a server computer at a specific location on the world wide web accessed through the website of the certifying authority. Therefore, the printer 30 may include a connection (not shown) between the printer controller 36 and a communication network so that the printer controller can access the certifying authority and obtain the appropriate certificate(s). The printer controller 34 may be programmed to use such a connection to periodically update the authentication information for the source computer(s) for documents to be authenticated, as the certifying authority may configure the certificate to be valid for only a certain period of time. Persons familiar with the cryptographic arts will also recognize that the authenticity verifier 34 may be programmed to rely on a chain of certificates, each of which certifies the next. Thus, a first certifying authority may produce a first certificate to certify the public key of a source computer. Then a second certifying authority may produce a second certificate to certify the first certificate. If the printer is configured to trust the second certifying authority to have properly authenticated the certificate of the first certifying authority, the printer may receive the second certificate, and thereby be able to process the chain of certificates to obtain the public key of the source computer. Such a chain of certificates can be constructed and followed through several certifying authorities, and may be conducted until a certificate from an ultimate certifying authority such as the United States Postal Service is identified.

The authentication information in the electronic document may include a digital watermark instead of a digital signature. Digital watermarks are created by encoding information signatures into a larger content signal. For example, the authenticity information may be encoded within the electronic document. To verify authentication information that includes a digital watermark, the authenticity verifier 36 of the printer 30 is programmed with a key that can access the authentication indication information of the digital watermark. The authenticity verifier 36 can then remove that information, so that the printer prints the underlying electronic document as a printed document 32. Again, if the authenticity verifier 36 confirms the authentication information in the digital watermark, the printer may print the printed document 32 with an authentication mark 40 or other indicia of authenticity.

The printer may be called upon to print documents from multiple source computers. For example, in addition to printing documents received from the first source computer 20, the printer may also print documents received from second or third source computers 80, 82. To verify the authenticity of the documents received from these different computers, each computer may use the same private key cipher 46 to encode the transmitted information. Then the printer authenticity verifier can use a single public key cipher 54 to verify the authentication information in documents received at the printer 30. However, the more source computers that use the same private key cipher, the greater the possibility that security of the information may be compromised. Therefore, each source computer 20, 80, 82 may use a different private key cipher 46. That requires that the printer authenticity verifier 36 store a separate public key cipher corresponding to each private key cipher for each source computer. The authenticity verifier 36 can be periodically updated with new public key information so that it can continually adapt to authenticating documents from different source computers. Multiple possible authentication algorithms may simultaneously be stored in the authenticity verifier.

When instructing the printer 30 to print an electronic print document 31, the destination computer 24 can identify for the authenticity verifier 36 for which source computer 20, 80, 82 the authenticity verifier should verify the authentication information. Alternatively, the authenticity verifier 36 may serially or in parallel perform a verification function for multiple possible source computers. For example, the authenticity verifier may first attempt to confirm the authentication information (the document signature 52) using the authentication algorithm including the public key 54 and digest algorithm associated with the first source computer 20. If the authenticity verifier confirms the document signature using the authentication algorithm associated with the first source computer 20, the printer 30 prints the document with an authentication mark identifying that first source computer. If, however, authentication algorithm associated with the first source computer does not confirm the document signature, the authenticity verifier may then attempt to confirm the authentication information using the authentication algorithm including the public key and digest algorithm associated with the second source computer 80. If the authenticity verifier confirms the document signature using the authentication algorithm associated with the second source computer, the printer prints the document with an authentication mark identifying that second source computer. This process may be continued with successive authentication algorithms associated with each possible source computer known to the authenticity verifier 36.

In certain applications, the authenticity verifier 36 may be configured by programming to authenticate a single electronic print document 31 having parts from multiple sources. For example, certain document formatting programs, such as Adobe Acrobat from Adobe Systems, place revisions to documents in separate layers of a document. For example, if a person operating the first source computer 20 creates a document, and then the person in the second source computer 80 modifies the document, the portions created by the two different computers 20, 80 are maintained in separate layers of the electronic document. Each source computer applies its own authentication information to its portion of the electronic document. The authenticity verifier 36 of the printer 30 can then separately authenticate the portion originating from each of the source computers 20, 80, and print on the printed document 32 separate authentication marks. The printer 30 may also be programmed in accordance with the user's desires to perform different print functions based on whether the authenticity verifier is able to authenticate all portions of the document. For example, if the authenticity verifier is able to authenticate the portion from the first source computer 20, but not the portion from the second source computer 80, the printer may be instructed to print only the portions of the document that the authenticity verifier is able to authenticate, or to print all portions of the document, but apply an authentication mark for only the first source computer, or to print all portions of the document with an authenticity caution, or not to print any of the document and to supply a message about the inability to authenticate all portions of the document.

Applications for a printer with an authenticity verifier are numerous, and may include any environment in which a viewer of a printed document desires to verify the authenticity of the printed document. For example, a construction crew working with construction plans may desire printed plans to take into the field. If the plans were transmitted electronically from the project customer (the first source computer), the plans may be printed at the office of the construction company office, or of the architect. The printer can authenticate the documents as having originated with the project customer (the source computer), and that the electronic document containing the plans was not altered during transmission, prior to printing. Such authentication provides the construction crew in the field confirmation that it is working with the appropriate plans. Other applications include various electronic commerce applications, including, for example, printing electronically transmitted orders, checks, or invoices. Another application is to block the printing of unwanted documents. For example, the printer controller 34 may be programmed to print documents only if the authenticity verifier 36 confirms authentication information identifying the document as having originated with certain specified sources. In such an application in which the objective is to control use of the printer, the printer does not necessarily print an authentication mark on the printed document 32. Others of the numerous applications will be apparent to those skilled in the art having read the above disclosure.

## Claims

1. A method of printing an electronic document, the method comprising:
in a printing apparatus, electronically verifying predetermined authentication information in the electronic document; and
if the verifying step confirms the predetermined authentication information, the printing apparatus automatically performs a first print function; and
if the verifying step does not confirm the predetermined authentication information, the printing apparatus automatically performs a second print function.

2. The method of **claim 1**, wherein the step of verifying predetermined authentication information comprises applying to the electronic document a cipher.

3. The method of **claim 2**, wherein:
the step of applying to the electronic document a cipher comprises the steps of:
applying to a first portion of the electronic document an asymmetric cipher to create a first received message digest; and
applying to a second portion of the electronic document a digest algorithm to obtain a second received message digest; and
the step of verifying additionally comprises comparing the first and second received message digests for a match, and wherein the printing apparatus automatically performs the first print function if the first and second received message digests match.

4. The method of **claim 3**, the method additionally comprising the steps of:
if the first and second received message digests do not match, applying to the electronic document a second cipher, the step of applying the second cipher comprising the steps of:
applying to the first portion of the electronic document a second asymmetric cipher to create a third received message digest; and
applying to the second portion of the electronic document a second digest algorithm to obtain a fourth received message digest; and
the step of verifying additionally comprises comparing the third and fourth received message digests for a match, and wherein the printing apparatus automatically performs the first print function if the third and fourth received message digests match.

5. In a printing apparatus, a method of printing a document, the method comprising:
storing on the printing apparatus one or more verification algorithms;
receiving at the printing apparatus an electronic document;
applying to at least a portion of the electronic document received at the printing apparatus a first one of the one or more verification algorithms to authenticate the electronic document; and
automatically printing on the printing apparatus the document with a first authentication mark if the step of applying the first verification algorithm authenticates the electronic document.

6. The method of **claim 5**, wherein the step of storing on the printing apparatus verification algorithms comprises storing first and second verification algorithms, and the method additionally comprises the steps of:
applying to at least a portion of the electronic document received at the printing apparatus the second verification algorithm; and
automatically printing on the printing apparatus the document with a second authentication mark if the step of applying the second verification algorithm authenticates the electronic document.

7. A document printer for printing electronic documents onto print media, the printer comprising:
an authenticity verifier for examining an electronic document to confirm predetermined authenticity information in the electronic document;
a print element for applying the image of the electronic document to a print medium.

8. The document printer of **claim 7**, wherein:
the print element automatically performs a first print function if the authenticity verifier confirms the predetermined authenticity information in the electronic document; and
the print element automatically performs a second print function if the authenticity verifier does not confirm the predetermined authenticity information in the electronic document.
